(19) Europäisches Patentamt
European Patent Office
Office européen des brevets

(11) **EP 0 931 283 B1**

(12) **EUROPÄISCHE PATENTSCHRIFT**

(45) Veröffentlichungstag und Bekanntmachung des Hinweises auf die Patenterteilung:
**14.03.2001   Patentblatt 2001/11**

(21) Anmeldenummer: **96944571.7**

(22) Anmeldetag: **08.10.1996**

(51) Int Cl.$^7$: **G05B 19/4103**, G05B 19/19

(86) Internationale Anmeldenummer:
**PCT/DE96/01925**

(87) Internationale Veröffentlichungsnummer:
**WO 98/15880 (16.04.1998 Gazette 1998/15)**

(54) **VERFAHREN UND REGELUNGSSTRUKTUR ZUR MOMENTENVORSTEUERUNG NUMERISCH GEREGELTER, ELASTISCHER UND DAMIT SCHWINGUNGSFÄHIGER MEHRMASSENSYSTEME**

METHOD AND CONTROL STRUCTURE FOR CONTROLLING MOMENTS IN NUMERICALLY CONTROLLED ELASTIC (AND THEREFORE OSCILLATION-CAPABLE) MULTIPLE MASS SYSTEMS

PROCEDE ET STRUCTURE DE REGULATION POUR L'ASSERVISSEMENT DE COUPLES DE SYSTEMES MULTIMASSES, A COMMANDE NUMERIQUE, ELASTIQUES ET POUVANT DONC OSCILLER

(84) Benannte Vertragsstaaten:
**AT CH DE ES FR GB IT LI SE**

(43) Veröffentlichungstag der Anmeldung:
**28.07.1999   Patentblatt 1999/30**

(73) Patentinhaber: **SIEMENS AKTIENGESELLSCHAFT**
**80333 München (DE)**

(72) Erfinder: **PAPIERNIK, Wolfgang**
**D-91054 Erlangen (DE)**

(56) Entgegenhaltungen:
**EP-A- 0 289 151        EP-A- 0 406 784**
**EP-A- 0 446 362        EP-A- 0 604 672**
**WO-A-92/15068          US-A- 4 734 847**

**Beschreibung**

Die Erfindung betrifft ein Verfahren sowie eine Regelungsstruktur zur Momentenvorsteuerung numerisch geregelter, elastischer und damit schwingungsfähiger Mehrmassensysteme wie Werkzeugmaschinen, Robotern oder dergleichen.

Antriebssysteme, bei denen zwischen Motor und Last, z.B. dem Tisch einer Werkzeugmaschine, keine starre Verbindung besteht, stellen elastische und damit schwingungsfähige Mehrmassensysteme dar.

Zum Vorsteuern von Geschwindigkeit oder Beschleunigung bzw. Moment solcher Antriebssysteme werden herkömmlicherweise Verfahren eingesetzt, welche davon ausgehen, daß eine starre Verbindung zwischen Motor und Last besteht. Ein solches Verfahren ist aus der EP 0 604 672 A1 bekannt, bei dem zur Drehmomentvorsteuerung von numerisch geregelten, verkoppelten Antriebssystemen die Beschleunigungsmomente für jede Achse aus den Eigen- und Koppelträgheitsmomenten im Drehmomentberechnungstakt bestimmt werden. Die Änderungen der Eigen- und Koppelträgheitsmomente werden in einem langsameren Takt nachgeführt. Somit ist das Verfahren zur Drehmomentvorsteuerung für Echtzeitanwendungen geeignet. Ein derartiges Verfahren funktioniert daher bei elastischen Systemen nur sehr eingeschränkt und besitzt einen hohen Fehleranteil.

Geeignete Verfahren zur Vorsteuerung von elastischen Systemen sind bisher noch nicht bekannt.

Aufgabe der vorliegenden Erfindung ist es daher, ein Verfahren sowie eine Regelungsstruktur zur Momentenvorsteuerung numerisch geregelter, elastischer und damit schwingungsfähiger Mehrmassensysteme zu schaffen, welche das elastische Verhalten zwischen Motor und Last berücksichtigen.

Gemäß der vorliegenden Erfindung wird diese Aufgabe durch ein Verfahren mit den folgenden Verfahrensschritten gelöst:

1.1  zur Führungsgrößengenerierung werden Parameter zur Einprägung von Sollbewegungszuständen aus einem Führungsmodell mindestens vierter Ordnung zur Bewegungsführung abgeschätzt, indem daraus abgeleitet in jeden Achsregelkreis

1.2  über einen Lagesollwertpfad im Interpolationstakt ein axialer Lagesollwinkel eingeprägt wird,

1.3  über einen Drehzahlvorsteuerpfad im Interpolationstakt ein axialer Drehzahlsollwert eingeprägt wird und

1.4  über einen Momentenvorsteuerpfad im Interpolationstakt ein axialer Antriebsmomentsollwert eingeprägt wird, wobei

1.5  ein für Schwingungen ursächliches, der ausgeprägtesten Eigenfrequenz des Mehrmassensystemes zugehöriges Federmoment ebenfalls aus dem Führungsmodell abgeleitet und durch eine Störgrößenaufschaltung auf den Momentenvorsteuerpfad kompensiert wird.

In einer ersten vorteilhaften Ausgestaltung des Verfahrens gemäß der vorliegenden Erfindung wird erreicht, daß die Beschleunigung durch zusätzliche Freiheitsgrade im Interpolationstakt vorgebbar wird. Dies wird durch folgenden weiteren Verfahrensschritt ermöglicht:

2.1  im Führungsmodell werden zu einer Feininterpolation Polynome vom Grad 5 oder höher verwendet.

Nach einer weiteren vorteilhaften Ausbildung des Verfahrens gemäß der vorliegenden Erfindung wird erreicht, daß nur die Ableitung des Rucks Unstetigkeiten im Verlauf aufweist. Dies wird durch folgenden weiteren Verfahrensschritt ermöglicht:

3.1  im Rahmen einer Feininterpolation werden die einzuprägenden Sollwerte aus über ein Interpolationsintervall gemittelten Verläufen abgeleitet.

Nach einer weiteren vorteilhaften Ausbildung des Verfahrens gemäß der vorliegenden Erfindung wird erreicht, daß eine Mittelwertbildung mit minimalem Rechenaufwand durchgeführt werden kann. Dies wird durch folgende weiteren Verfahrensschritte erreicht:

4.1  die zur Mittelwertbildung der Ableitungen aus dem Weg benötigten Integrale werden direkt aus dem Führungsmodel übernommen,

4.2  die Mittelwertbildung des Weges erfolgt ebenfalls explizit, indem jeweils über die Einzelbeiträge aller Polynome am Gesamtintegral des Weges aufsummiert wird und die Differenz der Summen über ein Interpolationsintervall gebildet wird.

Desweiteren wird eine Regelungsstruktur vorgestellt, die zur Lösung der Aufgabe der vorliegenden Erfindung besonders geeignet ist, da sie eine effektive Implementierung mit geringem Aufwand ermöglicht. Diese Regelungsstruktur weist folgende Elemente auf:

5.1 zur Führungsgrößengenerierung von Parametern zur Einprägung von Sollbewegungszuständen ist ein Führungsmodell mindestens vierter Ordnung zur Bewegungsführung vorgesehen, in welchem für jeden Achsregelkreis

5.2 ein Lagesollwertpfad zum Einprägen von axialen Lagesollwinkeln im Interpolationstakt vorgesehen ist,

5.3 ein Drehzahlvorsteuerpfad zum Einprägen von axialen Drehzahlsollwerten im Interpolationstakt vorgesehen ist und

5.4 ein Momentenvorsteuerpfad zum Einprägen von axialen Antriebsmomentsollwerten im Interpolationstakt vorgesehen ist, wobei

5.5 zur Kompensation eines für Schwingungen ursächlichen, der ausgeprägtesten Eigenfrequenz des Mehrmassensystemes zugehörigen Federmoments ein Mittel zur Störgrößenaufschaltung auf den Momentenvorsteuerpfad vorgesehen ist.

Nach einer vorteilhaften Weiterbildung der Regelungsstruktur gemäß der vorliegenden Erfindung wird erreicht, daß nur die Ableitung des Rucks Unstetigkeiten im Verlauf aufweist. Hierfür wird folgendes weiteres Element eingesetzt:

6.1 es ist ein Feininterpolator vorgesehen, welcher die einzuprägenden Sollwerte aus über ein Interpolationsintervall gemittelten Eingangsgrößen interpoliert.

Weitere Einzelheiten und Vorteile der vorliegenden Erfindung ergeben sich aus nachfolgender Beschreibung eines Ausführungsbeispieles und in Verbindung mit den Figuren. Soweit die Elemente übereinstimmen, sind gleiche Elemente mit gleicher Funktion mit denselben Bezugszeichen gekennzeichnet. Es zeigen:

FIG 1 Regelungsstruktur mit Vorsteuerung für elastische Antriebssysteme,

FIG 2 Schematische Veranschaulichung der Diskrepanz zwischen Führungsmodell und Achsmechanik beim elastischen System,

FIG 3 Schematische Veranschaulichung des erforderlichen Moments zur Einprägung der Bewegungszustände bei elastischen Systemen,

FIG 4 Regelungsetruktur einer Vorsteuerung für starre Antriebssysteme,

FIG 5 Normierte kartesische Bewegungszustände der x-Achse beim Abfahren einer Kreisbahn,

FIG 6 Normierte Zustände des Führungsmodells 4. Ordnung bei einem Positioniervorgang und

FIG 7 Normierte Zustände der Achsmechanik bei einem Positioniervorgang entsprechend FIG 6.

Im Sinne der vorliegenden Erfindung ist unter Antriebssystem ein System zu verstehen, das aus einem Aktuator, z.B. einem Elektrischen Antrieb, aus Koppelelementen und aus der angetriebenen Last, beispielsweise Werkzeugmaschinen- oder Roboterachsen und zusätzliche Lasten an diesen Achsen, besteht. Das Antriebssystem kann Mittel zur Regelung und/oder Steuerung aufweisen.

Verfahren zur Vorsteuerung von starren Antriebssystemen, welche auch bei elastischen Antriebssystemen eingesetzt werden, gehen davon aus, daß die Eigenschwingungen der Mechanik gut gedämpft sind, so daß quasi ein starres System vorliegt, das durch die Reihenschaltung zweier Integrierer beschrieben werden kann. Der Interpolator fordert im Interpolationstakt axiale Positions- und Geschwindigkeitssollwerte bei den Achsregelkreisen an, die vor ihrer Weiterverarbeitung zunächst noch feininterpoliert werden. Hierzu werden Polynome vom Grad 3 verwendet:

$$Poly(t) = a_0 + a_1 \cdot t + a_2 \cdot t^2 + a_3 \cdot t^3 \,, \; t \in [0, T_{Ipo}] \tag{1}$$

Die Koeffizienten $a_\nu$ können aus den Randbedingungen

$$Poly(0) = S_{Anfang}, \; Poly(T_{Ipo}) = S_{Ende}, \; \dot{Poly}(0) = V_{Anfang}, \; \dot{Poly}(T_{Ipo}) = v_{Ende}$$

berechnet werden. $S_{Anfang}$ und $S_{Ende}$ bezeichnet den Ort und $V_{Anfang}$ und $V_{Ende}$ die Geschwindigkeit jeweils am Anfang und am Ende des aktuellen Interpolationsintervalls.

Die zeitlichen Ableitungen

$$v(t)= \dot{Poly}(t)=a_1 +2a_2 \cdot t + 3a_3 \cdot t^2 \qquad (2)$$

$$a(t) = \ddot{Poly}(t) = 2a_2 + 6a_3 \cdot t \qquad (3)$$

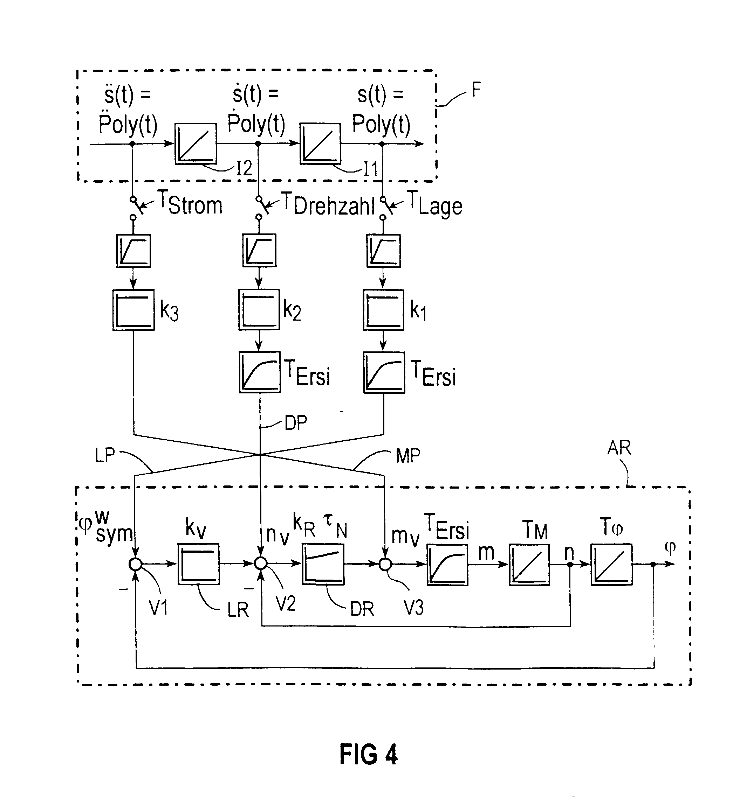

werden zur Vorsteuerung verwendet. Im Falle starrer Antriebssysteme ergibt sich damit ein Regelungsstruktur, wie sie beispielhaft gemäß der Darstellung nach FIG 4 gezeigt ist.

In der Darstellung gemäß FIG 4, welche der besseren Verständlichkeit halber zuerst erläutert werden soll, ist eine Regelungsstruktur zur Vorsteuerung von starren Antriebssystemen gezeigt. Diese besteht im wesentlichen aus einem Achsregelkreis AR und einem Führungsmodell F (beide gestrichelt umrandet). Der Achsregelkreis AR besitzt einen Lageregler LR, auf den ein axialer Lagesollwinkel $\varphi^w_{syn}$ aufgeschaltet wird. In der Regelstrecke folgt auf den Lageregler LR ein Drehzahlregler DR, der als PI-Glied ausgebildet sein kann. Während der Lagesollwinkel $\varphi^w_{sym}$ über einen Vergleicher V1 aufgeschaltet wird, geschieht dies bezüglich eines Drehzahlsollwertes $n_V$ über einen weiteren zwischen den Ausgang des Lagereglers LR und den Eingang des Drehzahlreglers DR geschalteten Vergleicher V2, dem auch ein ausgangsseitig bestimmter Drehzahlwert n als Regelwert aufgeschaltet ist. Dem Drehzahlregler DR ist ausgangsseitig ein weiterer Vergleicher V3 nachgeschaltet, welcher mit einem Beschleunigungssollwert $m_V$ beaufschlagt wird. Im Achsregelkreis AR wird aus den in der Regelstrecke eingeprägten Werten über eine Ersatzzeitkonstante $T_{Ersi}$ und zwei Integrierer $T_m$, $T\varphi$ ausgangsseitig ein Lagewinkel $\varphi$ erzeugt, welcher auf V1 rückgekoppelt wird.

Der axiale Lagesollwinkel $\varphi^w_{sym}$ wird über einen Lagesollwertpfad LP, der Drehzahlsollwert $n_V$ über einen Drehzahlvorsteuerpfad DP und der Beschleunigungssollwert $m_V$ über einen Momentenvorsteuerpfad MP aufgeschaltet. Die entsprechenden Sollwerte werden über die Vorsteuerpfade aus dem Führungsmodell F gewonnen. Diesem ist eingangsseitig ein Beschleunigungssollwert $\ddot{s}(t)$ zugeführt, aus welchem im Stromreglertakt $T_{Strom}$ über Ersatzzeitkonstanten der Beschleunigungssollwert $m_V$ gewonnen wird. Aus dem vorgegebenen Beschleunigungssollwert im Führungsmodel F wird über einen Integrierer I2 ein Geschwindigkeitssollwert abgeleitet, der im Drehzahlreglertakt-$T_{Drehzahl}$ unter Berücksichtigung von Konstanten $k_2$ und einer Ersatzzeitkonstanten $T_{Ersi}$ einen Geschwindigkeitsvorsteuerwert bereitstellt. Über einen weiteren Integrierer I1 wird schließlich ein Lagesollwert im Führungsmodell F bereitgestellt, aus dem im Lagereglertakt $T_{Lage}$ über die bereits beim Drehzahlvorsteuerpfad DP erläuterten Elemente ein axialer Lagesollwinkel $\varphi^w_{sym}$ generiert wird.

Zur Realisierung sind folgende Auswertungen erforderlich:

- Gleichung 3 im Stromreglertakt
- Gleichung 2 im Drehzahlreglertakt
- Gleichung 1 im Lagereglertakt

Hinzu kommen im Lagesollwertpfad LP und im Geschwindigkeits-bzw. Drehzahlvorsteuerpfad DP die Symmetrierglieder der Ersatzzeitkonstanten $T_{Ersi}$.

Die Gleichungen (2) und (3) lassen sich auch nur im Lagereglertakt $T_{Lage}$ realisieren. Ein zur Taktanpassung im Drehzahlvorsteuerpfad implementierter Hochlaufgeber ist dann additiv hinzuzufügen.

Bei Verwendung von Polynomen vom Grad 3 ist in Extremfällen die folgende Problematik nicht auszuschließen:

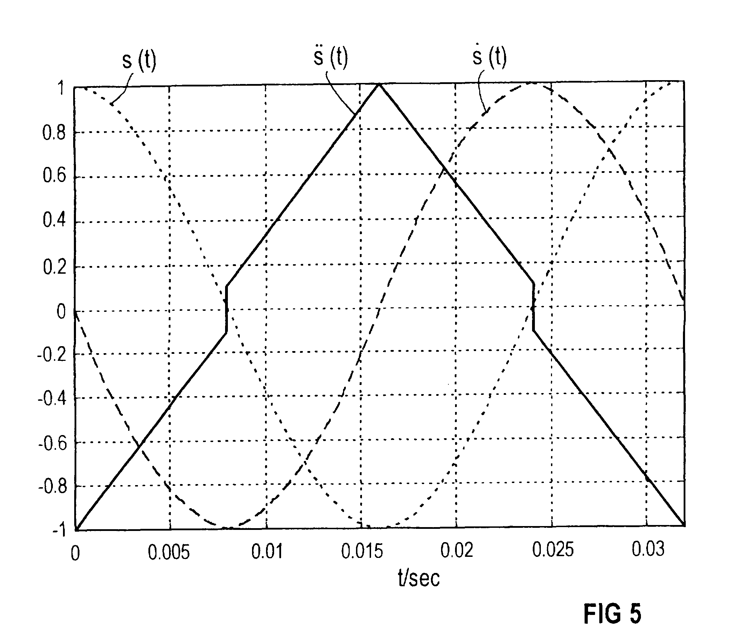

Der Verlauf der Beschleunigung ist zwar innerhalb eines jeden Interpolationsintervalls stetig, er kann jedoch an den Intervallgrenzen springen, wenn hohe zentrifugalkräfte auftreten (selbst bei ruckbegrenzter Bewegungsführung und $C^2$-stetiger Bahnvorgabe). Die Darstellung gemäß FIG 5 zeigt als Beispiel eine Kreisbahn, die mit konstanter Geschwindigkeit durchfahren wird.

Dargestellt sind die normierten kartesischen Bewegungszustände der x-Achse, wenn mit Polynomen von Grad 3 feininterpoliert wird. Anhand des gepunkteten Verlaufes ist die Position s(t), anhand des gestrichelten Verlaufs die Geschwindigkeit $\dot{s}(t)$ und durchgängig dargestellt der Beschleunigungsverlauf $\ddot{s}(t)$ gezeigt. Anhand des Verlaufes der Beschleunigung werden die Unstetigkeiten an den Intervallgrenzen deutlich.

Die Mechanik wird hier mit harten Momentenstößen beaufschlagt, so daß die beschriebene Beschleunigungsvorsteuerung nicht einsetzbar ist.

Zur Abhilfe sind zwei Alternativen möglich:

1.Verwendung von Polynomen vom Grad 5 anstelle vom Grad 3. Es ergeben sich dadurch zwei zusätzliche Freiheitsgrade, wodurch auch die Beschleunigung im Interpolationsraster explizit vorgegebbar wird.

2.Beibehaltung der Polynome vom Grad 3, zusätzliche Mittelwertbildung aller Zustände über einen Interpolationstakt. Die Mittelwertbildung wird an späterer Stelle detaillierter besprochen.

Als Vorteil gegenüber dem 1.Lösungsvorschlag ergibt sich dadurch ein wesentlich geringerer Rechenaufwand in der kinematischen Transformation.

Die vorangehenden Vorstellungen setzten voraus, daß die Mechanik genügend steif ist, so daß sie quasi als starres Einmassensystem betrachtet werden kann. In der Regel liegt aber ein schwingungsfähiges Mehrmassengebilde mit mehreren Eigenfrequenzen vor. Oftmals ist eine der Eigenresonanzen wesentlich ausgeprägter als alle anderen, so daß das System mit genügender Genauigkeit als Feder-Zweimassen-System beschrieben werden kann. Die nachfolgenden Darstellungen gehen davon aus.

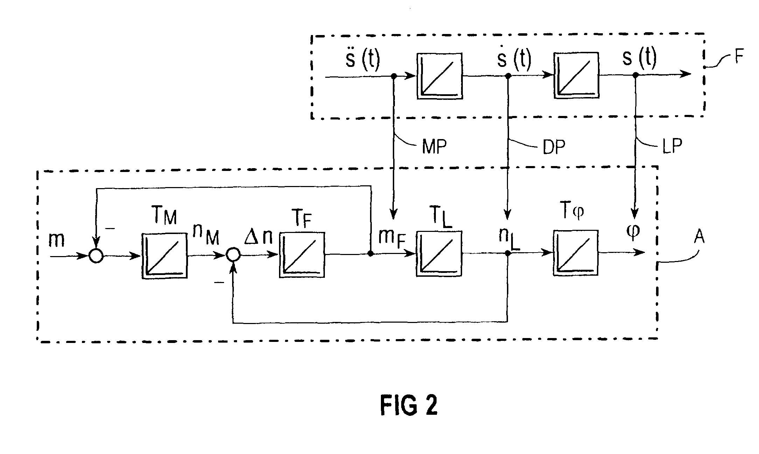

Zunächst muß berücksichtigt werden, daß hier zwischen dem Zweispeichermodell der Bewegungsführung und der tatsächlich vorhandenen Mechanik eine Diskrepanz besteht. Dieser Sachverhalt ist in der Darstellung gemäß FIG 2 gezeigt.

Dabei ist die einem elastischen Zwei-Massen-System zugrundeliegende Achsmechanik A anhand einer gestrichelt umrandeten Regelstrecke veranschaulicht. Eingangsseitig wird ein Momentenwert m zugeführt, ausgangsseitig steht ein Lagewinkel φ an. Aufgrund des Feder-Zwei-Massen-Systemes erfolgt eine Rückkopplung der Drehzahl $n_L$ auf der Lastseite auf eine Drehzahl $n_M$ auf der Antriebsseite. Ebenfalls wird ein Federmoment $m_F$ auf den Eingang der Achsmechanik A, also den Momentenwert m negativ zurückgekoppelt. Das Führungsmodell F stellt das bereits anläßlich der Darstellung gemäß FIG 4 beschriebene Zweispeichermodell mit zwei Integrierern dar. Über dieses Führungsmodell F werden über den Lagesollwertpfad LP, den Drehzahlvorsteuerpfad DP und den Momentenvorsteuerpfad MP Sollwerte generiert, welche jedoch aufgrund der Rückkopplungen in der Achsmechanik A nicht direkt in den Achsregelkreis wie in der Regelungsstruktur gemäß FIG 4 eingeprägt werden können.

Die vorgegebene Beschleunigung beispielsweise eines Maschinentisches einer Werkzeugmaschine kann jetzt nicht mehr unmittelbar, sondern erst verzögert in Form des Federmoments $m_F$ aufgebaut werden. Um eine Überforderung der Antriebe zu verhindern, wird dieser Umstand gemäß der vorliegenden Erfindung im Feininterpolator geeignet "korrigiert".

Anhand der vorhandenen 4 Speicher $T_M$, $T_F$, $T_L$, $T_\varphi$ der Achsmechanik A sieht man zunächst anschaulich, daß hier anders als beim starren System kein direkter Durchgriff auf die zweite, sondern erst auf die vierte Ableitung der Position möglich ist ($T_{Ersi}$ ist näherungsweise zu Null gesetzt). Die Rechnung ergibt:

$$\overset{\dots\dots}{\varphi}=\underbrace{\frac{1}{T_M T_L T_F T_\varphi}}_{c_1}\cdot m-\underbrace{\frac{\omega_0^2}{T_L T_\varphi}}_{c_2}\cdot m_F \qquad ; \qquad \omega_0=\sqrt{\frac{T_M+T_L}{T_M T_L T_F}} \qquad .(4)$$

Man kann hieraus das Antriebsmoment berechnen, das erforderlich ist, um einen bestimmten Wert von $\overset{\dots\dots}{\varphi}$ einzuprägen:

$$\overset{\dots\dots}{\varphi}=c_1\cdot m-c_2\cdot m_F\overset{!}{=}\overset{\dots\dots}{\varphi}^{\mathrm{w}} \implies m\overset{!}{=}(\overset{\dots\dots}{\varphi}^{\mathrm{w}}+c_2\cdot m_F)\cdot c_1^{-1} \qquad (5)$$

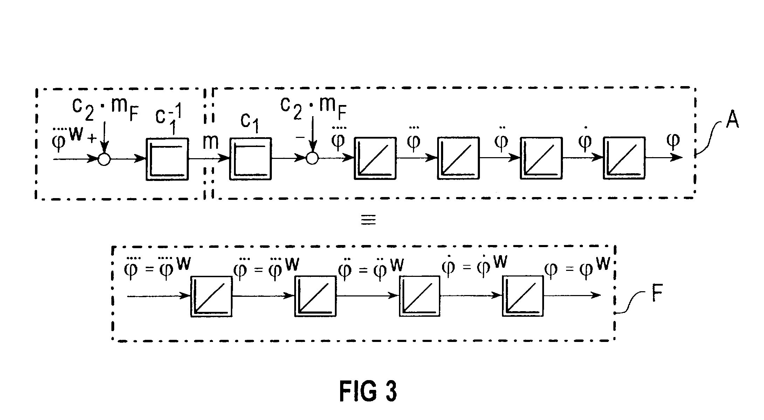

Unter Verwendung dieser Stellgröße verhält sich das Gesamtsystem wie eine Vierfachintegriererkette, die - aufgrund der scheinbar nicht mehr vorhandenen Elastizitäten - entsprechend über ein Führungsmodell F vierter Ordnung vorsteuerbar ist. Dieser Zusammenhang ist als schematische Veranschaulichung des erforderlichen Moments zur Einprägung der Bewegungszustände bei elastischen Systemen in der Darstellung gemäß FIG 3 gezeigt.

Die schematische Darstellung der Achsmechanik A (gestrichelt umrandet) wird eingangsseitig mit einem entsprechend der Gleichung (5) gewonnenen Sollwert m beaufschlagt. Der in Gleichung (5) gezeigte Sachverhalt ist dazu ebenfalls in einem gestrichelt umrandeten schematischen Element gezeigt, welches den Zusammenhang der Gleichung gegenständlich wiedergibt. Diese Summenanordnung ist identisch dem darunter dargestellten Führungsmodell F, was in der Darstellung durch drei waagerechte Striche (dem Identitätskennzeichen) symbolisiert ist.

Das entsprechend Gleichung (5) zur Vorsteuerung benötigte Federmoment braucht nicht gemessen zu werden, sondern kann ebenso wie die anderen zur Vorsteuerung bzw. Symmetrierung benötigten Zustände aus dem Führungsmodell F abgegriffen werden, weil sich im ungestörten Fall die Strecke identisch wie das Modell verhält. Das bietet den Vorteil, daß die Vorsteuerung komplett vom geschlossenen Regelkreis getrennt bleibt und so z.B. durch Ungenauigkeiten in den Modellparametern das Störverhalten nicht beeinträchtigen kann. Man gelangt so zu den Gleichungen (6), die unmittelbar aus FIG 3 entnehmbar sind. Um darauf hinzuweisen, daß es sich hierbei um dem Führungsmodell F entnommene Größen handelt, sind diese, wie auch in den entsprechenden Darstellungen der FIG, mit einem "^" gekennzeichnet:

$$\hat{m}_F = T_\varphi \cdot T_L \cdot \ddot{\hat{\varphi}}^w$$

$$\left.\begin{array}{l} \hat{n}_L = T_\varphi \cdot \dot{\hat{\varphi}}^w \\ \Delta\hat{n} = T_\varphi \cdot T_L \cdot T_F \cdot \dddot{\hat{\varphi}}^w \end{array}\right\} \Rightarrow \hat{n}_M = \hat{n}_L + \Delta\hat{n} = T_\varphi \cdot \dot{\hat{\varphi}}^w + T_\varphi \cdot T_L \cdot T_F \cdot \dddot{\hat{\varphi}}^w \qquad (6)$$

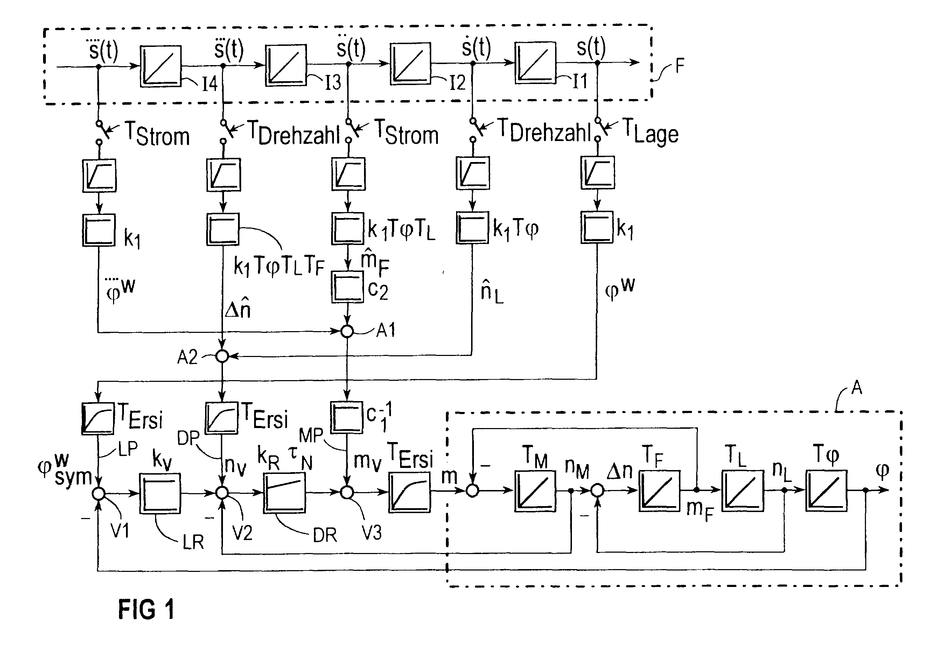

Mit der Kenntnis diesen Gleichungen läßt sich die Regelungsstruktur der Vorsteuerung für elastische Mehrmassensysteme komplett angeben. Eine mögliche Ausführungsform ist in der Darstellung gemäß FIG 1 gezeigt.

In der Darstellung gemäß FIG 1 ist eine Regelungsstruktur gemäß der vorliegenden Erfindung mit einer Vorsteuerung für elastische Antriebssysteme gezeigt. Darin findet sich auch die bereits im Zusammenhang mit FIG 2 erläuterte Achsmechanik A des elastischen Antriebssystems wieder. Zur Generierung von Größen für die Bewegungsführung ist ein entsprechend der Darstellung gemäß FIG 3 hergeleitetes Führungsmodell F gezeigt, welches aus einer Kette von vier aufeinanderfolgenden Integrierern I1 bis I4 besteht, eingangsseitig mit einer Ableitung des Rucks $\dddot{\ddot{s}}(t)$ beaufschlagt wird und am Ausgang des letzten Integrierers I1 einen Positionswert s(t) bereitstellt. Der Achsmechanik A ist nun eine Regelstrecke für das Antriebssystem vorgeschaltet, dessen Hauptbestandteil ein Lageregler LR, ein darauffolgender Drehzahlregler DR, der als PI-Glied ausgebildet sein kann, sowie darauffolgend eine Ersatzzeitkonstante $T_{Ersi}$ sind. Auf den Eingang des Lagereglers LR ist über einen Vergleicher V1 der ausgangsseitig an der Achsmechanik A anstehende Lagewinkel φ negativ als Regelgröße rückgeführt. Auf einen weiteren zwischen dem Ausgang des Lagereglers LR und dem Eingang des Drehzahlreglers DR befindlichen Vergleicher V2 ist die Motordrehzahl $n_M$ als Regelgröße negativ zurückgeführt. Zwischen dem Ausgang des Drehzahlreglers DR und dem Eingang der Ersatzzeitkonstanten $T_{Ersi}$ ist ein dritter Vergleicher V3 angeordnet.

Über den Vergleicher V1 wird dem Lageregler LR eingangsseitig über einen Lagesollwertpfad LP ein axialer Lagesollwinkel $\varphi^w_{sym}$ hinzuaddiert. Dem Ausgangssignal des Lagereglers LR wird über einen Drehzahlvorsteuerpfad DP ein Drehzahlsollwert $n_V$ über den Vergleicher V2 hinzuaddiert. Dem Ausgangssignal des Drehzahlreglers DR wird über den dritten Vergleicher V3 ein über einen Momentenvorsteuerpfad MP bereitgestellter Antriebsmomentsollwert $m_V$ hinzuaddiert. Die über die entsprechenden Vorsteuerpfade LP, DP und MP bereitgestellten Sollgrößen werden aus dem Führungsmodell F abgeleitet. Der axiale Lagesollwinkel $\varphi^w_{sym}$ wird im Lagereglertakt $T_{Lage}$ unter Berücksichtigung entsprechender Konstanten wie $k_1$, welche dem Kehrwert der Spindelsteigung entspricht, und weiteren Ersatzzeitkonstanten $T_{Ersi}$ aus dem am Ausgang des Führungsmodells F anstehenden Positionswert s(t) abgeleitet.

Zur Gewinnung des Drehzahlsollwertes $n_V$ wird im Drehzahlreglertakt $T_{Drehzahl}$ aus dem im Führungsmodell F bereitstehenden Geschwindigkeitswert $\dot{\hat{s}}(t)$ eine Drehzahl-Führungsgröße $\hat{n}_L$ gewonnen, welcher über einen Addierer A2 eine aus dem Ruck $\ddot{\hat{s}}(t)$ des Führungsmodells F gewonnene Drehzahldifferenz $\Delta n$ hinzu addiert wird. Der Summenwert gelangt über eine weitere Ersatzzeitkonstante $T_{Ersi}$ als axialer Drehzahlsollwert $n_V$ zum Vergleicher V2, wo er dem Drehzahlregler DR aufgeschaltet wird.

Ähnlich wird ein axialer Antriebsmomentsollwert $m_V$ im Stromreglertakt $T_{Strom}$ aus dem Führungsmodell F gewonnen. Dazu wird aus der Ableitung des Rucks $\dddot{\hat{s}}(t)$ die Größe $\ddot{\hat{\varphi}}^V$ über eine Gewichtung über den bereits geschilderten Parameter $k_1$ abgeleitet, der über einen weiteren Addierer A1 das aus dem Beschleunigungswert $\ddot{\hat{s}}(t)$ des Führungsmodells F ermittelte Federmoment $\hat{m}_F$ zu addiert wird. Aus der Summe wird gewichtet über den Faktor $C_1^{-1}$ der axiale Antriebsmomentensollwert $m_V$ gebildet, der über den Vergleicher V3 dem Ausgang des Drehzahlreglers DR hinzuaddiert wird. Über die bereits geschilderte auf den Vergleicher V3 folgende Ersatzzeitkonstante $T_{Ersi}$ wird nun bereits das anläßlich der FIG 3 erläuterte erforderliche Moment m in die Achsmechanik A eingeprägt.

Der Regelungsstruktur aus FIG 1 ist entnehmbar, daß die Bewegungsführung jetzt mit der Ableitung des Rucks als Eingangsgröße arbeiten müßte, um zur Strecke zu "passen" (wieder $T_{Ersi} \approx 0$ vorausgesetzt). Darüber hinaus müßte die Bahn $C^3$-stetig sein, um sicherzustellen, daß der Verlauf des Rucks keine Sprünge aufweisen kann. Aus Aufwandsgründen sind allerdings beide Forderungen wirtschaftlich nicht realisierbar, weshalb der nachfolgende Ansatz beschritten wird.

Voraussetzung ist, daß die Bewegungsführung ruckgeführt erfolgt, die Bahn $C^2$-stetig ist und die axialen Weg-, Geschwindigkeits- und Beschleunigungssollwerte im Interpolationstakt an die Achsregelkreise übergeben werden. Diese verwenden nun Polynome vom Grad 5 zur Feininterpolation:

$$s(t)=Poly(t)=a_0 +a_1 \cdot t +a_2 \cdot t^2 +a_3 \cdot t^3 +a_4 \cdot t^4 +a_5 \cdot t^5 \tag{7}$$

$$\dot{s}s(t) = \dot{Poly}(t)=a_1 +2a_2 \cdot t + 3a_3 \cdot t^2 + 4a_4 \cdot t^3 + 5a_5 \cdot t^4 \tag{8}$$

$$\ddot{s}(t) = \ddot{Poly}(t) = 2a_2 + 6a_3 \cdot t + 12a_4 \cdot t^2 + 20a_5 \cdot t^3 \tag{9}$$

$$\dddot{s}(t) = \dddot{Poly}(t) = 6a_3 + 24a_4 \cdot t + 60a_5 \cdot t^2 \tag{10}$$

$$\ddddot{s}(t) = \ddddot{Poly}(t) = 24a_4 + 120a_5 \cdot t \tag{11}$$

Weil allenfalls der Verlauf von $\ddddot{s}$ Sprünge aufweisen soll, wird anstelle mit den Augenblickswerten mit den über ein Interpolationsintervall gemittelten Verläufen gearbeitet. Diese lassen sich ohne Mehraufwand explizit berechnen, weil die zur Mittelwertbildung benötigten Integrale ohnehin bereits anhand der Gleichungen (7) - (11) vorliegen. So folgt zum Beispiel:

$$\overline{\ddddot{s}}(t) = \int_{t-T_{Ipo}}^{t} \ddddot{s}(t)\, dt = \dddot{s}(t) - \dddot{s}(t - T_{Ipo}) \quad;$$

Die Auswertung kann durch Anwendung von Gleichung (10) erfolgen.
Entsprechend gilt:

$$\overline{\dddot{s}}(t)=\ddot{s}(t)-\ddot{s}(t-T_{Ipo}) \;\; ; \;\; \overline{\ddot{s}}(t)=\dot{s}(t)-\dot{s}(t-T_{Ipo}) \;\; ;$$

$$\overline{\dot{s}}(t)=s(t)-s(t-T_{Ipo}) \;\; . \tag{12}$$

Auch die Mittelwertbestimmung des Weges $\bar{S}$ kann explizit erfolgen, wenn zunächst über die Einzelbeiträge $I_v$ aller Polynome am Gesamtintegral $I_{ges}$ des Wegs aufsummiert wird:

$$I_{ges} = \sum_{v} I_v \quad,$$

mit

$$I_\nu(t) := \int_{\nu T_{lpo}}^{\nu T_{lpo}+t} s(t)\,dt = \int_0^t Poly_\nu(t)\,dt = a_{0\nu}t + \frac{a_{1\nu}}{2}t^2 + \frac{a_{2\nu}}{3}t^3 + \frac{a_{3\nu}}{4}t^4 + \frac{a_{4\nu}}{5}t^5 + \frac{a_{5\nu}}{6}t^6 ;$$

$$t \in [0, T_{lpo}]$$

Der Mittelwert ergibt sich damit zu

$$\bar{s}(t) = I_{ges}(t) - I_{ges}(t - T_{lpo}) . \tag{13}$$

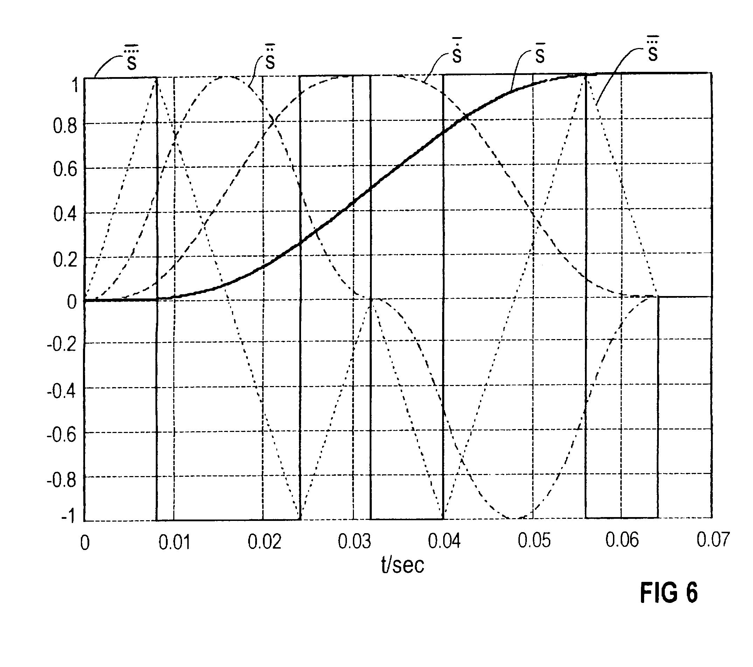

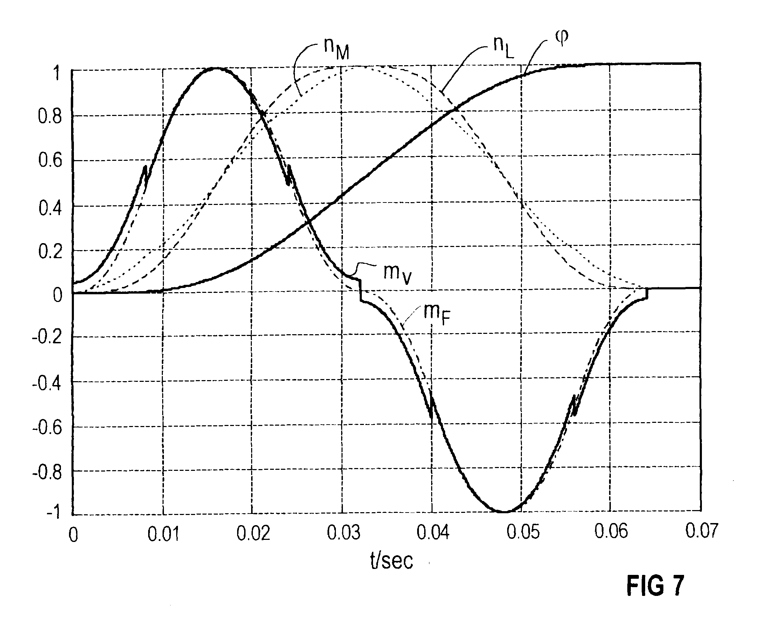

Die Darstellungen der FIG 6 und 7 zeigen die Anwendung des beschriebenen Verfahrens auf ein ungedämpftes Zweimassensystem mit einer Eigenfrequenz von 92 Hz. Dem Beispiel liegen die folgenden Daten zugrunde:

$$T_M = 20\,m\text{sec}, \; T_L = 60\,m\text{sec}, \; T_F = 200\,\mu\text{sec}, \; T_{Ersi} = 200\,\mu\text{sec},$$

$$T_{lpo} = 8\,m\text{sec}, \; T_{Lage} = 1\,m\text{sec}, \; T_{Drehzahl} = T_{Strom} = 62.5\,\mu\text{sec}.$$

Man erkennt zunächst anhand von FIG 6, daß es sich um einen ruckgeführten Bewegungsvorgang handelt, weil sich der Mittelwert des Rucks $\rightarrow \bar{\dddot{s}}$ rampenförmig ändert. Entsprechend "springt" der Mittelwert von $\bar{\ddddot{s}}$ im Interpolationstakt und ist innerhalb der Interpolationsintervalle wie gefordert konstant. Ein Vergleich der Solltischposition $\bar{s}$ mit dem Lastistwinkel $\varphi$ in FIG 7 läßt - bedingt durch die vernachlässigbar kleine Ersatzzeitkonstante $T_{Ersi}$ - keinen Unterschied zwischen den beiden normierten Größen erkennen. Ebenso sind die normierten Verläufe der Solltischgeschwindigkeit $\bar{\dot{s}}$ und der Lastdrehzahl $n_L$ sowie der Tischbeschleunigung $\bar{\ddot{s}}$ und des Federmoments $m_F$ wie gefordert quasi identisch. Das Vorsteuermoment $m_V$ ändert sich ebenso wie die Ableitung des Rucks erwartungsgemäß nur an den Übergängen der Interpolationsintervalle.

**Patentansprüche**

1. Verfahren zur Momentenvorsteuerung elastischer und damit schwingungsfähiger Mehrmassensysteme wie numerisch gesteuerten Werkzeugmaschinen, Robotern oder dergleichen, mit folgenden Verfahrensschritten:

1.1 zur Führungsgrößengenerierung werden Parameter zur Einprägung von Sollbewegungszuständen aus einem Führungsmodell

$$(\; s(t), \dot{s}(t), \ddot{s}(t), \dddot{s}(t), \ddddot{s}(t) \;)$$

mindestens vierter Ordnung zur Bewegungsführung abgeschätzt, indem daraus abgeleitet in jeden Achsregelkreis

1.2 über einen Lagesollwertpfad (LP) im Interpolationstakt ein axialer Lagesollwinkel ($\varphi^w_{sym}$) eingeprägt wird,

1.3 über einen Drehzahlvorsteuerpfad (DP) im Interpolationstakt ein axialer Drehzahlsollwert ($n_V$) eingeprägt wird und

1.4 über einen Momentenvorsteuerpfad (MP) im Interpolationstakt ein axialer Antriebsmomentsollwert ($m_V$) eingeprägt wird, wobei

1.5 ein für Schwingungen ursächliches, der ausgeprägtesten Eigenfrequenz des Mehrmassensystemes zugehöriges Federmoment ($m_F$) ebenfalls aus dem Führungsmodell

$$( \, s(t), \dot{s}(t), \ddot{s}(t), \dddot{s}(t), \ddddot{s}(t) \, )$$

abgeleitet und durch eine Störgrößenaufschaltung auf den Momentenvorsteuerpfad kompensiert wird.

**2.** Verfahren nach Anspruch 1, mit folgendem weiteren Verfahrensschritt:

    2.1

      im Führungsmodell

$$( \, s(t), \dot{s}(t), \ddot{s}(t), \dddot{s}(t), \ddddot{s}(t) \, )$$

werden zu einer Feininterpolation Polynome vom Grad 5 oder höher verwendet.

**3.** Verfahren nach einem der vorangehenden Ansprüche, mit folgendem weiteren Verfahrensschritt:

    3.1   im Rahmen einer Feininterpolation werden die einzuprägenden Sollwerte ($\varphi^w_{sym}$, $n_v$, $m_v$) aus über ein Interpolationsintervall gemittelten Verläufen

$$( \, \bar{s}(t), \bar{\dot{s}}(t), \bar{\ddot{s}}(t), \bar{\dddot{s}}(t), \bar{\ddddot{s}}(t) \, )$$

      abgeleitet.

**4.** Verfahren nach Anspruch 3, mit folgenden weiteren Verfahrensschritten:

    4.1   die zur Mittelwertbildung der Ableitungen aus dem Weg benötigten Integrale werden direkt aus dem Führungsmodel

$$( \, s(t), \dot{s}(t), \ddot{s}(t), \dddot{s}(t), \ddddot{s}(t) \, )$$

      übernommen,

    4.2   die Mittelwertbildung des Weges erfolgt ebenfalls explizit, indem jeweils über die Einzelbeiträge aller Polynome am Gesamtintegral des Weges aufsummiert wird und die Differenz der Summen über ein Interpolationsintervall gebildet wird.

**5.** Regelungsstruktur zur Momentenvorsteuerung elastischer und damit schwingungsfähiger Mehrmassensysteme wie numerisch gesteuerten Werkzeugmaschinen, Robotern oder dergleichen, mit folgenden Merkmalen:

    5.1   zur Führungsgrößengenerierung von Parametern zur Einprägung von Sollbewegungszuständen ist ein Führungsmodell

$$( \, s(t), \dot{s}(t), \ddot{s}(t), \dddot{s}(t), \ddddot{s}(t) \, )$$

      mindestens vierter Ordnung zur Bewegungsführung vorgesehen, in welchem für jeden Achsregelkreis

    5.2   ein Lagesollwertpfad (LP) zum Einprägen von axialen Lagesollwinkeln ($\varphi^w_{sym}$) im Interpolationstakt vorgesehen ist,

    5.3   ein Drehzahlvorsteuerpfad (DP) zum Einprägen von axialen Drehzahlsollwerten ($n_v$) im Interpolationstakt

vorgesehen ist und

5.4 ein Momentenvorsteuerpfad (MP) zum Einprägen von axialen Antriebsmomentsollwerten ($m_v$) im Interpolationstakt vorgesehen ist, wobei

5.5 zur Kompensation eines für Schwingungen ursächlichen, der ausgeprägtesten Eigenfrequenz des Mehrmassensystemes zugehörigen Federmoments ($m_F$) ein Mittel (A1) zur Störgrößenaufschaltung auf den Momentenvorsteuerpfad vorgesehen ist.

**6.** Regelungsstruktur nach Anspruch 5, mit folgendem weiteren Merkmal:

6.1 es ist ein Feininterpolator vorgesehen, welcher die einzuprägenden Sollwerte aus über ein Interpolationsintervall gemittelten Eingangsgrößen

$$( \; \overline{s}(t), \overline{\dot{s}}(t), \overline{\ddot{s}}(t), \overline{\dddot{s}}(t), \overline{\ddddot{s}}(t) \; )$$

interpoliert.

**Claims**

**1.** Method for advance moment control of elastic and thus oscillating multiple-mass systems such as numerically controlled machine tools, robots or the like, having the following method steps:

1.1 for reference-variable generation, parameters for impressing nominal movement states are estimated from an at least 4th-order reference model

$$( s(t), \dot{s}(t), \ddot{s}(t), \overline{\dddot{s}}(t), \overline{\ddddot{s}}(t) )$$

for movement control in that, derived from this in each axis control loop,

1.2 an axial nominal position angle ($\varphi^w_{sym}$) is impressed via a nominal position value path (LP) in time with the interpolation,

1.3 an axial nominal rotation speed value ($n_v$) is impressed via an advance rotation speed control path (DP) in time with the interpolation, and

1.4 an axial nominal drive moment value ($m_v$) is impressed via an advance moment control path (MP) in time with the interpolation, in which case

1.5 a spring moment ($m_F$) which causes oscillations and is associated with the most pronounced natural frequency of the multiple-mass system is likewise derived from the reference model

$$( s(t), \dot{s}(t), \ddot{s}(t), \overline{\dddot{s}}(t), \overline{\ddddot{s}}(t) )$$

and compensated for by applying disturbance variables to the advance moment control path.

**2.** Method according to Claim 1, having the following method step:

2.1 5th or higher order polynomials are used for fine interpolation in the reference model

$$( s(t), \dot{s}(t), \ddot{s}(t), \overline{\dddot{s}}(t), \overline{\ddddot{s}}(t) ).$$

**3.** Method according to one of the preceding claims, having the following further method step:

3.1 in the course of fine interpolation, the nominal values ($\varphi^w_{sym}$, $n_v$, $m_v$) to be impressed are derived from profiles

$$(s(t)\dot{s}(t),\bar{s}(t),\bar{\bar{s}}(t),\bar{\bar{s}}(t)$$

averaged over one interpolation interval.

**4.** Method according to Claim 3, having the following further method steps:

4.1 the integrals required for averaging of the derivatives from the movement are transferred directly from the reference model

$$(s(t),\dot{s}(t),\bar{s}(t),\bar{\bar{s}}(t),\bar{\bar{s}}(t))$$

4.2 the averaging of the movement is likewise carried out explicitly in that the individual contributions of all of the polynomials to the total integral of the movement are each added up and the difference between the sums is formed over one interpolation interval.

**5.** Control structure for advance moment control of elastic and thus oscillating multiple-mass systems such as numerically controlled machine tools, robots or the like, having the following features:

5.1 an at least 4th-order reference model

$$(s(t),\dot{s}(t),\bar{s}$$

$$(t),\bar{\bar{s}}(t),\bar{\bar{s}}(t))$$

for movement control is provided for reference-variable generation of parameters for impressing nominal movement states, in which reference model, for each axis control loop,

5.2 a nominal position value path (LP) is provided for impressing axial nominal position angles ($\varphi^w_{sym}$) in time with the interpolation,

5.3 an advance rotation speed control path (DP) is provided for impressing axial nominal rotation speed values ($n_v$) in time with the interpolation, and

5.4 an advance moment control path (MP) is provided for impressing axial nominal drive moment values ($m_v$) in time with the interpolation, in which case

5.5 a means (A1) is provided for applying disturbance variables to the advance moment control path in order to compensate for a spring moment (mF) which causes oscillations and is associated with the most pronounced natural frequency of the multiple-mass system.

**6.** Control structure according to Claim 5, having the following further features:

6.1 a fine interpolator is provided which interpolates the nominal values to be impressed from input variables

$$(s(t),\dot{s}(t),\bar{s}(t),\bar{\bar{s}}(t),\bar{\bar{s}}(t))$$

averaged over one interpolation interval.

**Revendications**

**1.** Procédé pour l'asservissement du couple de systèmes multimasses à commande numérique, élastiques et pouvant donc osciller, tels que des machines-outils, des robots ou des ensembles similaires, présentant les étapes de procédé suivantes:

1.1 pour générer la grandeur de commande, on évalue des paramètres pour l'application d'états de mouvement de consigne, à partir d'un modèle de référence

$$( s(t), \dot{s}(t), \ddot{s}(t), \dddot{s}(t), \ddddot{s}(t) )$$

au moins du quatrième degré pour la commande de mouvement, par le fait que dérivé de là, à chaque boucle de régulation d'axe

1.2 on applique, selon la cadence d'interpolation, par l'intermédiaire d'une ligne de valeur de consigne de position (LP), un angle de consigne de position ($\varphi^{w}_{sym}$), axial,

1.3 on applique, selon la cadence d'interpolation, par l'intermédiaire d'une ligne d'asservissement de vitesse de rotation (DP), une valeur de consigne de vitesse de rotation ($n_{v}$), axiale, et

1.4 on applique, selon la cadence d'interpolation, par l'intermédiaire d'une ligne d'asservissement de couple (MP), une valeur de consigne de couple d'entraînement ($m_{v}$), axiale,

1.5 un couple élastique ($m_{F}$) à l'origine d'oscillations et associé à la fréquence propre la plus marquée du système multimasses, étant également dérivé du modèle de référence

$$( s(t), \dot{s}(t), \ddot{s}(t), \dddot{s}(t), \ddddot{s}(t) )$$

et compensé par la compensation d'une grandeur perturbatrice sur la ligne d'asservissement du couple.

**2.** Procédé selon la revendication 1, présentant l'étape de procédé supplémentaire suivante:

2.1 dans le modèle de référence

$$( s(t), \dot{s}(t), \ddot{s}(t), \dddot{s}(t), \ddddot{s}(t) )$$

on utilise pour une interpolation fine, des polynômes de degré 5 ou plus élevé.

**3.** Procédé selon l'une des revendications précédentes, présentant l'étape de procédé supplémentaire suivante:

3.1 dans le cadre d'une interpolation fine, les valeurs de consigne ($\varphi^{w}_{sym}$, $n_{v}$, $m_{v}$) à appliquer sont dérivées de moyennes sur un intervalle d'interpolation, des lois de variation

$$( \bar{s}(t), \bar{\dot{s}}(t), \bar{\ddot{s}}(t), \bar{\dddot{s}}(t), \bar{\ddddot{s}}(t) ).$$

**4.** Procédé selon la revendication 3, présentant les étapes de procédé supplémentaires suivantes:

4.1 les intégrales nécessaires à la formation de la valeur moyenne des dérivées du déplacement sont reçues directement du modèle de référence

$$( s(t), \dot{s}(t), \ddot{s}(t), \dddot{s}(t), \ddddot{s}(t) ),$$

4.2 la formation de valeur moyenne du déplacement est également effectuée de manière explicite, par le fait que la sommation est effectuée à chaque fois par l'intermédiaire des contributions individuelles de tous les polynômes à l'intégrale globale du déplacement, et l'on forme la différence des sommes sur un intervalle d'interpolation.

**5.** Structure de régulation pour l'asservissement du couple de systèmes multimasses à commande numérique, élastiques et pouvant donc osciller, tels que des machines-outils, des robots ou des ensembles similaires, présentant les caractéristiques suivantes:

5.1 pour générer la grandeur de commande de paramètres pour l'application d'états de mouvement de consigne, il est prévu un modèle de référence

$$( s(t), \dot{s}(t), \ddot{s}(t), \dddot{s}(t), \ddddot{s}(t) )$$

au moins du quatrième degré pour la commande de mouvement, dans lequel pour chaque boucle de régulation d'axe

5.2 il est prévu une ligne de valeur de consigne de position (LP) pour l'application selon la cadence d'interpolation, d'angles de consigne de position ($\varphi^{w}_{sym}$), axiaux,

5.3 il est prévu une ligne d'asservissement de vitesse de rotation (DP) pour l'application selon la cadence d'interpolation, de valeurs de consigne de vitesse de rotation ($n_v$), axiales,

5.4 il est prévu une ligne d'asservissement du couple (MP) pour l'application selon la cadence d'interpolation, de valeurs de consigne de couple d'entraînement ($m_v$), axiales,

5.5 un moyen (A1) destiné à la compensation d'une grandeur perturbatrice sur la ligne d'asservissement du couple étant prévu pour compenser un couple élastique ($m_F$) à l'origine d'oscillations et associé à la fréquence propre la plus marquée du système multimasses.

**6.** Structure de régulation selon la revendication 5, présentant la caractéristique supplémentaire suivante:

6.1 il est prévu un interpolateur d'interpolation fine, qui effectue l'interpolation des valeurs de consigne à appliquer à partir de grandeurs d'entrée

$$( s(t), \dot{s}(t), \ddot{s}(t), \dddot{s}(t), \ddddot{s}(t) )$$

dont la moyenne a été effectuée sur un intervalle d'interpolation.

FIG 1

FIG 2

**FIG 3**

**FIG 4**

FIG 5

EP 0 931 283 B1

**FIG 6**

FIG 7